# EUROPÄISCHE PATENTSCHRIFT

(11) **EP 1 606 596 B1**
(45) Veröffentlichungstag und Bekanntmachung des Hinweises auf die Patenterteilung: **22.08.2007**
(21) Anmeldenummer: 04722181.7
(22) Anmeldetag: 20.03.2004
(51) Int. Cl.: G01G 19/414

(54) **KRAFTMESSZELLE**
DYNAMOMETRIC CELL
CELLULE DYNAMOMETRIQUE

(30) Priorität: 21.03.2003 DE 10313828
(43) Veröffentlichungstag der Anmeldung: 21.12.2005
(73) Patentinhaber: Bizerba GmbH & Co. KG, 72336 Balingen (DE)
(72) Erfinder: SELIG, Klaus, Peter, 8606 Greifensee (CH); WURSTER, Klaus, 72124 Pliezhausen (DE)
(74) Vertreter: Wössner, Gottfried
(86) Internationale Anmeldenummer: PCT/EP2004/002953
(87) Internationale Veröffentlichungsnummer: WO 2004/083792

(56) Entgegenhaltungen:
- EP-A- 1 376 078
- WO-A-02/08705
- WO-A-03/060440
- WO-A-20/04003501
- WO-A-20/04043746
- WO-A-20/04074787
- DE-A- 10 111 020
- US-A- 3 695 096
- US-A- 4 454 769
- US-A- 5 988 676

## Beschreibung

Die Erfindung betrifft eine Kraftmesszelle mit einem elastisch verformbaren Kraftaufnehmer zur Aufnahme einer Gewichtskraft und einer Sensoranordnung zur Erfassung der Kraftaufnehmerverformung und deren Umwandlung in ein elektrisches Wägesignal, wobei der Kraftaufnehmer an einem ersten Ende mit einem Montageteil verbunden ist und an seinem zweiten Ende ein Krafteinleitungsteil trägt und das Krafteinleitungsteil hohlzylindrisch ausgebildet ist und mit einem Ende mit dem zweiten Ende des Kraftaufnehmers verbunden ist und so angeordnet ist, dass es im Wesentlichen den Kraftaufnehmer über dessen gesamte Länge umschließt.

Kraftmesszellen sind vielfältig im Einsatz und in unterschiedlichen Ausprägungen bekannt.

So beschreibt die DE 44 206 91 C1 eine Kraftmesszelle mit einem Kraftaufnehmer in Form eines sogenannten Parallelogrammlenkers, der einstückig aus einem nicht magnetischen, elektrisch leitenden Material gearbeitet ist. Die Sensoranordnung umfasst dort ein induktives Sensorelement, welches benachbart zum Krafteinleitungsteil des Kraftaufnehmers gegenüber einem Signal gebenden Teil seitens des Montageteils so angeordnet ist, dass sich bei Belastung des Krafteinleitungsteils mit der Kraft F eine von dieser Kraft abhängige Änderung des Abstands zwischen dem Sensorelement und dem Signal gebenden Teil aufgrund der elastischen Verformung des Kraftaufnehmers ergibt.

Solche Kraftaufnehmer sind vielfach in Wägevorrichtungen eingebaut und arbeiten dort mit großer Zuverlässigkeit und hoher Auflösung.

Ein anderer Typ Kraftaufnehmer ist beispielsweise aus der DE 35 15 126 bekannt, bei der die Kraftmesszelle einen biegeelastischen rohrförmigen Bolzen umfasst, mit einem in dem Hohlraum des Bolzens einseitig fest eingespannten starren Messstab und einen am anderen Bolzenende eingesetzten Sensor. Das freie Ende des Messstabes liegt dem induktiv arbeitenden Sensor axial gegenüber. Die Krafteinleitung erfolgt zwischen dem Bolzenende und der Einspannstelle des starren Messstabs. Bei einer Durchbiegung des Bolzens ändert sich die Lage des freien Endes des Messstabes gegenüber dem Sensor, und diese Ortsveränderung wird von den Sensoren erfasst und in ein elektrisches Signal umgewandelt. Solche elektromechanischen Kraftmesser sind zur Erfassung von großen Kräften gut geeignet, wobei auf Genauigkeit weniger Wert gelegt werden muss. Einem ähnlichen Prinzip folgend arbeitet auch die Kraftmesszelle gemäß der DE 38 43 869 C2. Auch diese Kraftmesszelle ist zum Erfassen großer Kräfte bei geringerer Genauigkeit geeignet.

Allen vorgenannten Kraftmesszellen gemeinsam ist, dass der Kraftaufnehmer zwar robust ist, aber relativ groß baut und deshalb in einer Reihe von Anwendungen, wo an sich eine Bestimmung einer Gewichtskraft wünschenswert wäre, nicht zum Einsatz kommen kann.

Aus der WO 02/08705 A1 ist ein Kraftaufnehmer zur Aufnahme der in eine Halterung eines Fahrzeugsitzes eingeleiteten Gewichtskraft mit einem mit dem Fahrzeugsitz verbundenen Krafteinleitungselement, einem mit der Halterung verbundenen Kraftabgabeelement und einem zwischen Krafteinleitungselement und Kraftabgabeelement vorgesehenen Dehnungskörper bekannt. Das Krafteinleitungselement oder das Kraftabgabeelement umgibt den Dehnungskörper in einer Ebene parallel zur Gewichtskraftwirkung und an dem Dehnungskörper ist mindestens ein eine Scherkraft parallel zur Gewichtskraft aufnehmender Dehnungsmessstreifen angeordnet.

Aus der nachveröffentlichten WO 03/060440 A1 ist ein Kraftaufnehmer mit zwei Krafteinleitungselementen bekannt, an denen die zu messende Kraft und die Abstützkraft eingeleitet werden, wobei die beiden Krafteinleitungselemente im Wesentlichen rotationssymmetrisch ausgebildet sind und in axialer Richtung beabstandet sind. Die zu messende Kraft und die Abstützkraft werden in radialer Richtung eingeleitet. Es ist ein Federelement vorgesehen, das in axialer Richtung zwischen den beiden Krafteinleitungselementen angeordnet ist und diese verbindet und dessen belastungsabhängige Deformation in ein elektrisches Signal umgewandelt wird. Es ist ferner eine im Wesentlichen rohrförmige Abdeckung vorgesehen, die mit einem der beiden Krafteinleitungselemente verbunden ist und das Federelement umgibt.

Aus der US 5,988,676 ist ein Sicherheitsrückhaltesystem zum Zurückhalten einer Person, welche auf einem Sitz sitzt, bekannt. Das System umfasst einen Gewichtssensor, welcher das Gewicht der Person bestimmt und ein entsprechendes Ausgangssignal erzeugt.

Aus der US 3,695,096 ist eine Spannungsmessvorrichtung bekannt, welche einen im Wesentlichen zylindrischen Lastzellenkörper umfasst. Dieser Zellenkörper hat longitudinal beabstandete Umfangsgebiete, und Bereiche mit reduziertem Querschnitt.

Aus der US 4,454,769 ist eine Messzelle für Radialkräfte bekannt.

Aufgabe der vorliegenden Erfindung ist es, eine Kraftmesszelle der eingangs beschriebenen Art so weiter zu bilden, dass sie auch in beengten Verhältnissen eingebaut werden kann und eine genauere Gewichtskraftbestimmung zulässt.

Diese Aufgabe wird erfindungsgemäß dadurch gelöst, dass der Kraftaufnehmer als Hohlstab mit zwei in Längsrichtung des Stabs beabstandeten Schwächungszonen ausgebildet ist, und dass das Krafteinleitungsteil mit seinem anderen Ende am Montageteil beweglich gelagert ist.

Die erfindungsgemäße Kraftmesszelle vereint dabei die Vorteile der vorstehend vorgestellten Bolzenlösungen einerseits mit der größeren Genauigkeit der Parallelogrammlenkerlösung andererseits. Darüber hinaus kann aufgrund der Verwendung eines Hohlstabes die Sensoranordnung im Innern desselben angeordnet werden, so dass diese geschützt und insbesondere von elektromagnetischen Umwelteinflüssen abgeschirmt werden kann. Aufgrund der Stabform des Kraftaufnehmers lässt sich dieser leicht als Schraubbolzen ausführen, der dann anstelle von herkömmlichen Schraubbolzen dieselbe VerbinderFunktion übernehmen kann, gleichzeitig aber zusätzlich als vollwertige Kraftmesszelle fungiert.

Das Krafteinleitungsteil ist hohlzylindrisch ausgebildet und mit einem Ende mit dem zweiten Ende des Kraftaufnehmers verbunden.

Das hohlzylindrische Krafteinleitungsteil ist so angeordnet, dass es sich im Wesentlichen über die gesamte Länge des Kraftaufnehmers erstreckt und diesen dabei umschließt.

Das andere Ende des hohlzylindrischen Krafteinleitungsteils ist am Montageteil beweglich gelagert.

Die Schwächungszonen der erfindungsgemäßen Kraftmesszefle werden bevorzugt so ausgebildet, dass der Kraftaufnehmer beim Einwirken von zu bestimmenden Gewichtskräften in mehr als einer Ebene elastische Verformungsbewegungen durchführen kann. Damit können nicht nur Kräfte bzw. Kraftkomponenten, die in einer Richtung auf den Kraftaufnehmer einwirken, erfasst werden, sondern es können richtungsabhängig Kräfte bestimmt bzw. Kraftkomponenten einer auf den Kraftaufnehmer wirkenden Kraft erfasst und ausgewertet werden.

Bevorzugt werden die Schwächungszonen einen Abschnitt des Hohlstabs mit verminderter Wanddicke umfassen. Dies lässt sich relativ einfach am Außenumfang des Hohlstabs oder auch an der Innenwandung des Hohlstabs realisieren.

Die Schwächungszonen können rings umlaufend in Umfangsrichtung des Hohlstabs ausgebildet sein, wobei dann durch geeignete Ausbildung der Sensoranordnung festgelegt wird, in welchen Richtungen Gewichtskraftskomponenten bestimmt werden können oder aber die Schwächungszonen können sich in Umfangsrichtung des Hohlstabs nur partiell radial erstrecken und als gegenüberliegende Kreissegmente ausgebildet sein, so dass aufgrund der Schwächungszonen bereits die Richtung der zu messenden Kraftkomponenten festgelegt werden kann.

Der Hohlstab kann entweder zylindrisch rohrförmig sein oder aber einen beliebigen polygonalen Querschnitt aufweisen.

Daneben sind auch ovale Querschnitte des Hohlstabes vorstellbar, womit den jeweiligen spezifischen Anforderungen der Einbausituation und/oder der jeweiligen Applikation, für die die Kraftmesszelle vorgesehen ist, Rechnung getragen werden kann.

Bei einer bevorzugten Ausführungsform der Erfindung weist der Hohlstab mittig im Bereich zwischen den Schwächungszonen Durchgangsöffnungen in Form einer Querbohrung auf. Die Querbohrung, die die Wandung des Hohlstabes zweifach durchsetzt, vermindert den Einfluss von Torsionskräften auf das Messergebnis erheblich.

Eine Alternative besteht darin, den Hohlstab an zwei sich radial gegenüberliegenden Segmenten eines Hohlprofils mit Durchgangsöffnungen zu versehen, die sich mindestens von der einen bis zur anderen Schwächungszone erstrecken.

Durch die Schaffung der Durchgangsöffnungen im Hohlprofil verringert man natürlich die mechanische Stabilität, was sich in einer verminderten maximal zulässigen Gewichtskraft äußert.

Vergrößert man die Wandstärke des Hohlprofils, aus dem der Hohlstab gefertigt wird, dann lässt sich der Messbereich wieder vergrößern, so dass auch bei der maximal zulässig zu messenden Gewichtskraft gegenüber den Ausführungsformen mit vollständigem Hohlprofil als Hohlstab keine Abstriche gemacht werden müssen.

Die Durchgangsöffnungen können sich bei bestimmten Ausführungsformen bis zum freien Ende des Hohlstabes erstrecken, welches das Krafteinleitungsteil trägt. Dort allerdings werden dann die beiden Hohlprofilteile wieder fest miteinander verbunden, beispielsweise durch Verschweißen mit dem Krafteinleitungsteil.

Von den herkömmlichen Parallellenker-Kraftmesszellen unterscheidet sich diese Ausführungsform immer noch dadurch, dass Kräfte aus nicht nur einer Richtung aufgenommen und zu einem Messergebnis verarbeitet werden können aufgrund der Geometrie der (verbleibenden) Wand des Hohlstabes.

Diese Wandung weicht in jedem Fall aus der Ebene ab, während beim Parallellenkertyp planare Wandungen verwendet werden.

Bei besonders bevorzugten Ausführungsformen ist das Krafteinleitungsteil topfförmig ausgebildet und umfängt mit seinem offenen Ende den Kraftaufnehmer. Dadurch ist der Kraftaufnehmer durch das Krafteinleitungsteil umgeben und gleichzeitig vor mechanischen Einwirkungen geschützt. Dasselbe gilt auch für die Sensoranordnung, die durch das topfförmige Krafteinleitungsteil ebenfalls umgeben und geschützt ist.

Dazu wird vorzugsweise das Krafteinleitungsteil so dimensioniert, dass sich dessen Topfwandungen im Wesentlichen über die gesamte Länge des Kraftaufnehmers erstrecken, wobei dann das offene Ende des Krafteinleitungsteils benachbart zu dem Montageteil angeordnet ist. Dies hat den zusätzlichen Vorteil, dass man die Ebenen, in denen die Kraft auf das Krafteinleitungsteil wirkt und die Ebene, in der über das Montageteil die Kraft an die Umgebung abgeleitet wird, relativ nahe zueinander anordnen kann, so dass nur geringe Verwindungs- bzw. Torsionskräfte auf den Kraftaufnehmer wirken. Dies vereinfacht die Konstruktion bzw. die Dimensionierung der Teile der Kraftmesszelle erheblich, da den Torsionsbeanspruchungen kein allzu großes Gewicht beigemessen werden muss.

Das Krafteinleitungsteil wird, um seine Schutzfunktion, die neben der mechanischen auch eine elektromagnetische Schutzfunktion sein kann, ausüben zu können, im Wesentlichen durchbruchsfrei ausgebildet, so dass ein kompletter Schutz der im Innern des Krafteinleitungsteils angeordneten Teile der Kraftmesszelle gewährleistet ist.

Vorzugsweise weist das Krafteinleitungsteil und der Montageteil Befestigungsabschnitte auf, welche eine Krafteinleitung und eine Kraftableitung in benachbarten, vorzugsweise im Wesentlichen parallelen Ebenen, definieren. Diese Ebenen sollen, nach den vorgenannten Gesichtspunkten, möglichst nah beieinander liegen, so dass die Torsionskräfte, die bei der Einleitung von Kräften auf die Kraftmesszelle wirken, möglichst gering sind.

Bevorzugt weist das hohlzylindrische Krafkeinleitungsteil an seinem mit dem Kraftaufnehmer verbundenen Ende einen Außengewindeabschnitt auf.

Dazu wird am Montageteil vorzugsweise eine ringförmige Aufnahme vorgesehen, die das andere Ende des Krafteinleitungsteils aufnimmt und lagert.

Weiter bevorzugt wird das Krafteinleitungsteil am Montageteil mittels eines Anschlages gehalten, welcher gleichzeitig die Bewegung des Krafteinleitungsteils limitiert. Bei übergroßen Kräften ist zum einen das Krafteinleitungsteil gegen ein Herausreißen aus der Aufnahme des Montageteils gesichert, und darüber hinaus ist insbesondere für den Kraftaufnehmer ein Überlastschutz geschaffen.

Um die kompakte Bauweise konsequent weiter zu führen wird bevorzugt an dem Montageteil ein Halteelement koaxial zum Hohlstab angeordnet, so dass sich dieses in den Hohlstab hinein erstreckt und der Halterung eines Teils der Sensoranordnung oder auch der gesamten Sensoranordnung dienen kann.

Bevorzugt weist das Halteelement hierbei eine Ausnehmung auf, in der elektrische Signalkabel der Sensoranordnung geführt sind. Dadurch ergibt sich eine besonders einfache und auch platzsparende Möglichkeit der Verkabelung und der Signalverbindung der Sensoranordnung mit einer zugehörigen Steuerung.

Weiter bevorzugt wird die erfindungsgemäße Kraftmesszelle einen integrierten, mechanischen Überlastschutz umfassen. Der mechanische Überlastschutz bedeutet, dass bei einer Einwirkung einer übermäßig großen, d.h. nicht mehr zugelassenen Kraft, sich das Krafteinleitungsteil an einem Anschlag abstützt, so dass die maximale Verformung des Kraftaufnehmers begrenzt und damit eine mechanische Beschädigung durch Überlast ausgeschlossen ist.

Je nach Ausführungsform der Kraftmesszelle, bedingt auch wieder durch die Einbausituation derselben, kann der Anschlag am Halteelement selbst ausgebildet sein und eine Verformungsbewegung des Kraftaufnehmers selbst limitieren.

Andererseits kann der Anschlag am Montageteil und am Krafteinleitungsteil ausgebildet sein, so dass die Verformungsbewegung des Kraftaufnehmers indirekt limitiert wird.

Bei einer weiteren Variante kann vorgesehen sein, dass der Anschlag am Krafteinleitungsteil und am Kraftaufnehmer ausgebildet ist und so zu einer mechanischen Begrenzung der elastischen Verformung des Kraftaufnehmers führt.

Weiterhin umfasst das Halteelement eine Ausnehmung, in der ein Sensorelement angeordnet und aufgenommen werden kann. Weiter bevorzugt umfasst die Ausnehmung eine Führung zur Festlegung der geometrischen Ausrichtung des Sensorelements in der Kraftmesszelle.

Die Sensoranordnung kann aus verschiedenen bekannten Sensoranordnungen ausgewählt werden und beispielsweise einen oder mehrere Dehnungsmessstreifen umfassen.

Alternativ kann die Sensoranordnung für eine berührungsfreie Wegmessung ausgebildet sein. Bei einer speziellen Ausführungsform ist die Sensoranordnung eine induktiv arbeitende Sensoranordnung. Bei räumlich sehr kompakten Kraftmesszellen empfiehlt sich insbesondere eine Sensoranordnung mit einem Hallsensor und einem Magneten, insbesondere einem Permanentmagneten.

Bei dieser Ausführungsform kann der Magnet am Krafteinleitungsteil und der Hallsensor am Halteteil angeordnet sein. Eine umgekehrte Anordnung, d.h. die Anordnung des Magneten am Halteteil und die Anordnung des Hallsensors am Krafteinleitungsteil, ist ebenfalls möglich. Die erste Konfiguration hat allerdings den Vorteil, dass die Signalleitungen des Sensors im Halteteil geführt werden können und somit sehr platzsparend und gleichzeitig geschützt angeordnet sind.

Bevorzugt wird der Hallsensor und der Magnet der Sensoranordnung so ausgebildet und angeordnet, dass der Hallsensor im unbelasteten Zustand der Kraftmesszelle ein elektrisches Signal mit einem Wert kleiner einem Drittel des maximalen Nutzsignales erzeugt.

Dies gewährleistet, dass für die Auswerteschaltung eine ausreichende Reserve zur Verstärkung des Nutzsignals gegeben ist und ein ausreichendes Signalrauschverhältnis vorliegt.

Bei einer ersten Variante kann der Magnet dem Hallsensor gegenüber als Monopol wirkend ausgebildet sein, wobei der Hallsensor eine geradzahlige Anzahl an Sensorelementen umfasst, die in Form einer zweidimensionalen Matrix dem Monopol gegenüberliegend angeordnet sind, wobei jeweils zwei der Sensorelemente einen Teil einer elektronischen Differenzschaltung bilden.

Alternativ kann der Magnet dem Hallsensor gegenüber als Dipol wirkend ausgebildet sein, wobei der Hallsensor ein oder mehrere Sensorelemente umfasst, deren Signale getrennt erfassbar sind.

Eine weitere Alternative besteht darin, eine optische Sensoranordnung auszuwählen.

Hierbei wird bevorzugt die Sensoranordnung eine Lichtquelle und eine Schlitzblende einerseits und eine Differenzphotodiode andererseits umfassen, wobei die Lichtquelle und die Schlitzblende gemeinsam am Kraftaufnehmer gehalten sind und die Differenzphotodiode am ortsfesten Montageteil der Kraftmesszelle angeordnet ist.

Alternativ kann die Sensoranordnung eine Lichtquelle und eine Schlitzblende einerseits und eine Differenzphotodiode andererseits umfassen, wobei die Lichtquelle und die Schlitzblende gemeinsam am ortsfesten Montageteil der Kraftmesszelle angeordnet sind und die Differenzphotodiode am Kraftaufnehmer gehalten ist.

Diese und weitere Vorteile der Erfindung werden im Folgenden anhand der Zeichnungen noch näher erläutert.

Es zeigen im Einzelnen:
- Figur 1A:: eine Schnittansicht durch eine erfindungsgemäße Kraftmesszelle;
- Figur 1B:: eine Schnittansicht durch eine Variante der erfindungsgemäßen Kraftmesszelle der Figur 1A;
- Figur 2:: eine Schnittansicht durch eine weitere Variante einer erfindungsgemäßen Kraftmesszelle;
- Figur 3:: eine perspektivische Ansicht einer erfindungsgemäßen Kraftmesszelle;
- Figur 4:: eine perspektivische Ansicht einer weiteren Variante einer erfindungsgemäßen Kraftmesszelle;
- Figur 5 :: eine Draufsicht auf die Kraftmesszelle der Figur 4;
- Figur 6:: eine Draufsicht auf eine weitere Variante einer erfindungsgemäßen Kraftmesszelle;
- Figur 7:: eine Schnittansicht durch die Kraftmesszelle der Figur 6 längs Linie VII-VII;
- Figur 8:: eine perspektivische Darstellung einer weiteren Variante eines erfindungsgemäßen Kraftaufnehmers;
- Figur 9:: eine Schnittdarstellung durch den Kraftaufnehmer der Figur 8; und
- Figur 10:: eine Schnittdarstellung durch eine erfindungsgemäße Kraftmesszelle, welche den Kraftaufnehmer der Figur 8 beinhaltet.

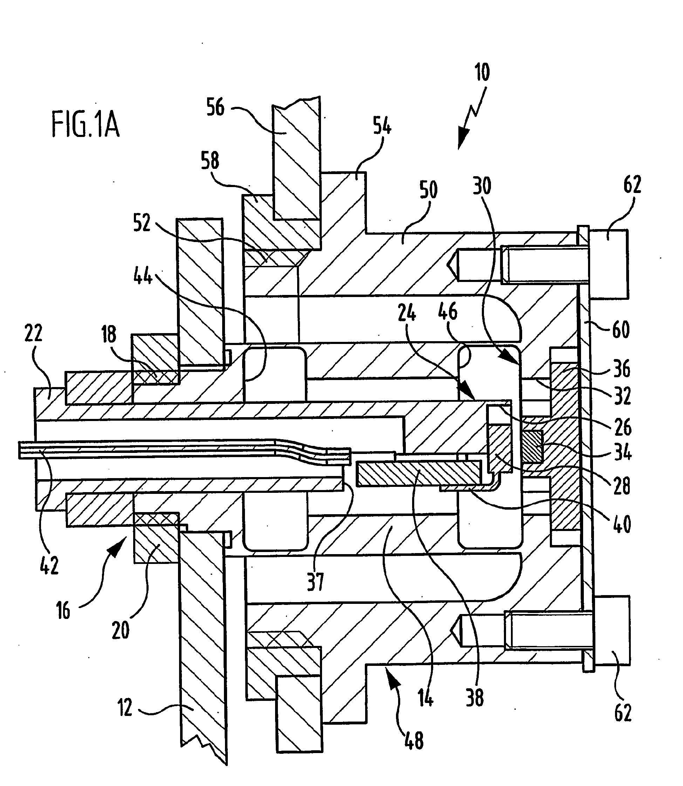

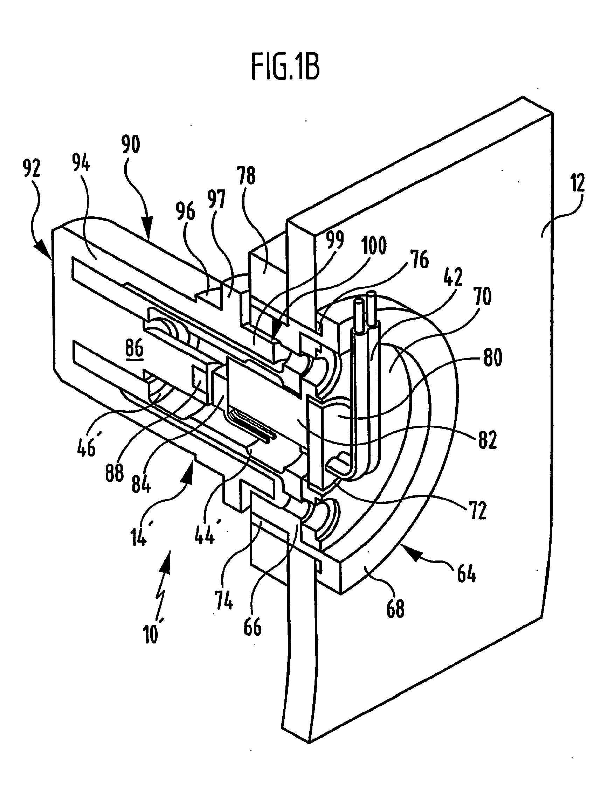

Figur 1A zeigt eine insgesamt mit dem Bezugszeichen 10 versehene Kraftmesszelle, welche von einer gestellfesten Platte 12 gehalten ist. Im Falle der Verwendung der erfindungsgemäßen Kraftmesszelle 10 in einem Kraftfahrzeugsitz kann die gestellfeste Platte 12 beispielsweise die Oberschiene der Fahrzeugsitzhalterung sein.

Die Kraftmesszelle 10 ist aufgebaut aus einem elastisch verformbaren Kraftaufnehmer 14, der an einem ersten, in der Figur links liegenden Ende mit einem Montageteil 16 ausgestattet ist, welches durch eine Öffnung in der gestellfesten Platte mit einem Gewindeabschnitt 18 hindurchgreift, über welchen mit einer Kontermutter 20 der Kraftaufnehmer 14 an der gestellfesten Platte 12 gesichert werden kann.

Der Kraftaufnehmer 14 ist hohlzylindrisch ausgebildet und auf Seiten des Montageabschnitts 16 offen, so dass im Hohlraum des Kraftaufnehmers 14 ein biegesteifes Halteelement 22 koaxial eingeschoben werden kann. Das Halteelement 22 selbst ist bevorzugt auch hohlzylindrisch, wie abgebildet, ausgeführt und weist an seinem freien Ende 24 eine Ausnehmung 26 auf, in welcher ein Hallsensor 28 in vorgegebener Position montierbar ist. Der Hallsensor 28 liegt dabei parallel zu einer Bodenfläche 30 des Kraftaufnehmers 14, in welcher eine mittige Öffnung 32 vorgesehen ist, welche der Aufnahme eines Permanentmagneten 34 dient. Bevorzugt wird der Permanentmagnet 34 hierbei von einem Deckelteil 36 gehalten und gegenüber dem Hallsensor 28 ausgerichtet. Bevorzugt wird, wie in Figur 1A ersichtlich, das Deckelteil 36 über eine Spannbrücke 60 am freien Ende des Krafteinleitungsteils 50 gehalten und mit mehreren Spannbolzen 62 fixiert.

Das Halteelement 22, das an seinem freien Ende den Hallsensor 28 trägt, weist benachbart hierzu eine weitere Ausnehmung 37 auf, in der ein Schaltkreis 38 aufgenommen werden kann, der direkt mit dem Hallsensor 28 über Leitungen 40 verbunden ist. Der Schaltkreis 38 dient der Aufarbeitung des Sensorsignals des Hallsensors 28 direkt an Ort und Stelle und übermittelt störungsunempfindliche Signale über die Anschlussleitungen 42 nach außen. Die Anschlussleitungen 42 beinhalten gleichzeitig auch die Energieversorgung für den Schaltkreis 38.

Der Kraftaufnehmer 14 ist, wie in Figur 1A gezeigt, mit einer in seinem Inneren ausgebildeten ringförmigen Ausnehmung 44 und einer in Längsrichtung davon beabstandeten ringförmigen Ausnehmung 46 versehen, die jeweils zu einer Schwächung der Wandung des hohlzylindrischen Kraftaufnehmers 14 führen und dadurch Gelenkstellen bilden, die dem Kraftaufnehmer die Funktion eines Parallelogrammkraftaufnehmers verleihen.

Aufgrund der ringförmigen Ausgestaltung der Ausnehmungen 44 und 46 sind mehrdimensionale Bewegungen des Kraftaufnehmers aufgrund von eingeleiteten Kräften möglich, d.h. der Kraftaufnehmer kann auf Kräfte, die aus unterschiedlichen Richtungen wirken, reagieren, und diese können bei entsprechender Ausgestaltung des Kombinationspaares Sensor 28 und Permanentmagnet 34 entsprechend ausgewertet werden.

An seinem freien Ende trägt der Kraftaufnehmer 14 ein Krafteinleitungsteil 48, welches topfförmig ausgebildet ist, wobei die Bodenfläche des Krafteinleitungsteils 48 hier einstückig mit dem Boden 30 des Kraftaufnehmers 14 ist. Der von der Bodenfläche 30 abstehende Rand in Form einer zylindrischen Wandung 50 des Krafteinleitungsteils 48 erstreckt sich im Wesentlichen über die gesamte freie Länge des Kraftaufnehmers 14 hinweg und schützt diesen so im Wesentlichen vollständig vor mechanischen Einwirkungen. Zusätzlich wirkt die zylindrische Wandung 50 als elektromagnetische Abschirmung für die Sensoranordnung.

An seinem freien Ende trägt die zylindrische Wandung 50 einen Ringflansch 54 sowie einen daran anschließenden Ringflansch, an dem zur Krafteinleitung eine Platte 56, beispielsweise die Oberschwinge einer Sitzhöhenverstellung eines Fahrzeugsitzes, mit Hilfe einer von der Kontermutter 58 verschraubbar ist.

Es versteht sich, dass der Einbau der erfindungsgemäßen Kraftmesszelle auch invers erfolgen kann, d.h. das Krafteinleitungsteil 48 gestellfest (Platte 12) verbunden wird, während das Montageteil 16 mit der Platte 56 (beispielsweise die Oberschwinge eines Fahrzeugsitzes) verbunden wird.

Figur 1B zeigt eine ähnliche Ausführungsform zu der in Figur 1A in perspektivischer Schnittdarstellung, wobei gleiche Teile mit gleichem Bezugszeichen versehen sind.

Im Gegensatz zu der Ausführungsform der Figur 1A weist der Kraftaufnehmer 14' ein Montageteil 64 auf, welches eine zylindrische Wandung 66 umfasst mit einem am vom Kraftaufnehmer 14' abgewandten Ende ringsumlaufenden, nach außen abstehenden Bund 68. Im Inneren der zylindrischen Wandung 66 weist das Montageteil 64 einen nach innen abstehenden Ringflansch 70 auf, über den das Montageteil 64 dann mit dem Kraftaufnehmer 14' verbunden ist.

Die durch den nach innen stehenden Ringflansch 70 definierte mittige Öffnung 72 fluchtet mit dem hohlzylindrischen Innenraum des Kraftaufnehmers 14'.

Bei der Montage wird das Montageteil 64 durch eine Öffnung in der gestellfesten Platte 12 durchgeschoben und liegt an dieser auf einer Seite mit dem Bund 68 flächig an. Um eine Abdichtung zwischen dem Bund 68 und der Platte 12 zu erreichen, kann der Bund 68, wie in Figur 1B gezeigt, eine direkt benachbart zu der zylindrischen Wandung 66 angeordnete Ringnut 76 aufweisen, in welche ein Dichtungsring oder ein sonstiges Dichtungsmittel einsetzbar ist.

Auf der gegenüberliegenden Seite der Platte 12 wird dann eine Kontermutter 78 auf das Außengewinde 74 aufgeschraubt und so das Montageteil 64 an der Platte 12 festgelegt. Über die Öffnung 72 ist das Innere des Kraftaufnehmers 14' immer noch zugänglich, und diese Öffnung wird vorzugsweise von einem Deckel 80 verschlossen, welcher Durchführungen für die Anschlussleitungen 42 aufweist.

Auf seiner innen liegenden Seite weist der Deckel 80 ein Halteelement 82 auf, welches in Figur 1B als Bolzen gezeigt ist. Am Ende des bolzenförmigen Halteelementes 82 ist ein Hallsensor 84 angeordnet, der über eine elektronische Schaltung schließlich mit den Anschlussleitungen 42 verbunden ist. Die elektronische Schaltung ist hier der Einfachheit halber weggelassen und nicht gezeigt. Im Prinzip unterscheidet sich die Anordnung aber bei der Ausführungsform der Figur 1B nicht wesentlich von der der Figur 1A.

Unterschiedlich zu der Konfiguration der Figur 1A ist hier allerdings die Position des Hallsensors, die hier im Wesentlichen zwischen den beiden ringförmigen Ausnehmungen an der Innenwand des Kraftaufnehmers 14' angeordnet ist. Korrespondierend ist der Permanentmagnet 88 von Seiten des Bodenteiles des Kraftaufnehmers 14' her auf einem ins Innere des Kraftaufnehmers 14' vorstehenden Bolzen 86 getragen, so dass er wieder justiert in einer Ebene parallel und beabstandet von dem Hallsensorelement 84 angeordnet ist. Der Kraftaufnehmer 14' ist an dem mit dem Montageteil 64 verbundenen Teil entgegengesetzt liegenden Ende mit einem Krafteinleitungsteil 90 verbunden, welches hier als einstückig mit dem Kraftaufnehmer 14' dargestellt ist, aber genauso gut am freien Ende des Kraftaufnehmers 14', d.h. an dem von der Platte 12 abstehenden Teil des Kraftaufnehmers 14', beispielsweise über Schraubbolzen, verbunden sein kann.

Das Krafteinleitungsteil 90 ist wiederum, wie bereits in Figur 1A gezeigt, topfförmig ausgebildet mit einem Boden 92 und einer zylindrischen Wandung 94, welche sich vom Boden 92 aus zurück über die Länge des Kraftaufnehmers 14' hinweg erstreckt.

An dem dem Boden 92 abgewandten Ende der zylindrischen Wandung 94 trägt diese eine nach außen abstehende Stufe 96 und daran anschließend einen nach außen abstehenden Ringflansch 97. Die Stufe 96 dient dem Aufschrumpfen einer die Kraft auf das Krafteinleitungsteil einleitenden Platte (in Figur 1B nicht dargestellt), die im Wesentlichen parallel zu der Platte 12 angeordnet werden kann, was durch eine flächige Anlage an dem Ringflansch 97 gewährleistet wird.

Vorzugsweise erstreckt sich die zylindrische Wandung 94 allerdings noch weiter in Richtung zur Platte 12 und greift mit ihrem oberen Rand 99 in einen Raum innerhalb der zylindrischen Wand 66 des Montageteils 64 ein. Durch die Wahl der Dicken der zylindrischen Wandung 66 einerseits und 94 bzw. des oberen Randes 99 andererseits läßt sich ein Spalt 100 vorgeben, welcher die maximale Bewegung der zylindrischen Wandung 94 des Krafteinleitungsteils gegenüber dem Montageteil 64 definiert. Damit stellt der obere Rand 99 im Zusammenwirken mit der zylindrischen Wand 66 des Montageteils 64 eine mechanische Überlastsicherung dar, denn sie verhindert, dass übermäßig auf die Kraftmesszelle 10' einwirkende Kräfte zu einer unzulässigen Verformung des Kraftaufnehmers 14' führen, denn hier würde zunächst eine flächige Anlage des oberen Randes 99 an der zylindrischen Wand 66 des Montageteiles 64 erfolgen, was eine weitere Bewegung und weitere Verformung des Kraftaufnehmers 14' verhindert.

Aufgrund der symmetrischen Geometrie von oberem Rand 99 und zylindrischer Wandung 66 ergibt sich eine allseitige mechanische Überlastsicherung, so dass unabhängig von der Richtung, aus der die Kräfte auf die Kraftmesszelle 10' eingeleitet werden, der Kraftaufnehmer 14' in seiner Funktion gesichert wird und dieser funktionsfähig erhalten bleibt.

Die zuletzt beschriebene Sicherungsfunktion durch einen mechanischen Anschlag ist selbstverständlich unabhängig davon zu realisieren, wie die Position des Hallsensors und des zugehörigen Permanentmagneten innerhalb des Kraftaufnehmers 14 angeordnet sind. Das bedeutet, dass die Anordnung auch bei der Figur 1B ähnlich ausgeführt sein kann wie in der Figur 1A, d.h. benachbart zum freien Ende des Kraftaufnehmers 14', an dem dieser mit dem Krafteinleitungsteil 90 verbunden ist.

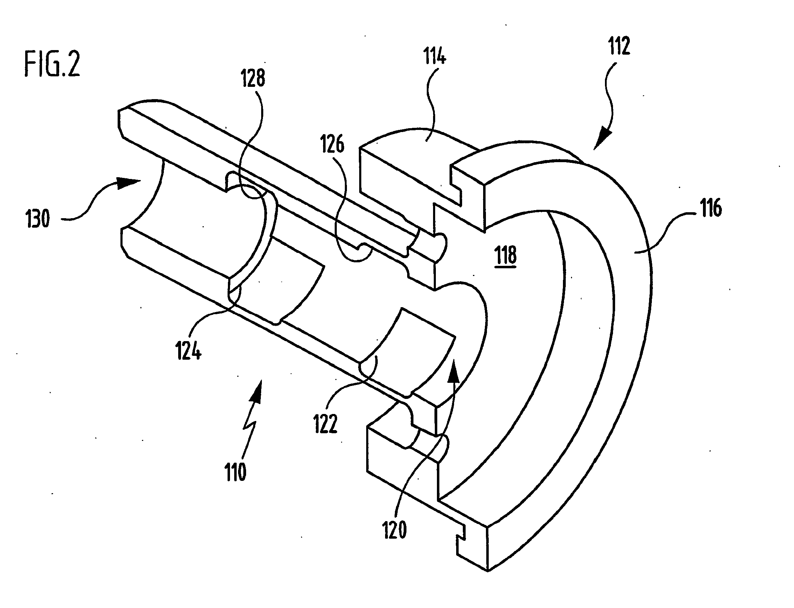

Figur 2 zeigt einen Kraftaufnehmer 110, der ähnlich aufgebaut ist wie der Kraftaufnehmer 14' der Figur 1B und welcher an seinem gestellfest zu haltenden Ende mit einem Montageteil 112 einstückig ausgebildet ist. Das Montageteil 112 umfasst eine im Wesentlichen zylindrische Wandung 114, welche an ihrem von dem Kraftaufnehmer 110 abgewandten Ende einen nach außen abstehenden Bund 116 trägt, welcher dieselben Funktion hat wie der Bund 68 der Ausführungsform der Figur 1B.

Im Inneren der zylindrischen Wandung 114 ist ein nach innen abstehender Ringflansch 118 vorgesehen, über den das Montageteil 112 mit dem Kraftaufnehmer 114 verbunden ist.

Der Ringflansch 118 lässt eine Öffnung 120 frei, welche mit dem Inneren des hohlzylindrisch ausgebildeten Kraftaufnehmers 110 fluchtet.

Der Kraftaufnehmer 110 weist an seiner Innenoberfläche ringsegmentartig ausgebildete Rücksprünge 122 und 124 auf, welche in Längsrichtung des Kraftaufnehmers 110 voneinander beabstandet angeordnet sind und welche die Gelenkpunkte des Kraftaufnehmers 110 bilden und diesen als Parallelogrammlenker definieren.

Bei dieser Ausführungsform ist im Gegensatz zu der in Figur 1B gezeigten Ausführungsform die Zahl der Richtungen, in denen Kräfte auf den Kraftaufnehmer 110 einwirken können, beschränkt auf den Winkelbereich, den die beiden Rücksprünge 122 und 124 abdecken. Gegenüberliegend zu den Rücksprüngen 122 und 124 sind Rücksprünge 126, 128 vorgesehen, die zusammen mit den Rücksprüngen 122, 124 die notwendigen Gelenkstellen definieren. Am freien Ende 130 des Kraftaufnehmers 110 kann dieser mit Hilfe eines topfförmigen Krafteinleitungsteiles, wie dies dem Krafteinleitungsteil 90 der Ausführungsform in Figur 1B entspricht, verschlossen werden, welches dann auch einen Bolzen tragen kann, auf dem der Permanentmagnet für die Sensoranordnung gehalten sein kann.

Von Seiten der Öffnung 120 kann über einen biegefesten Bolzen wiederum das Hallelement im Inneren des Kraftaufnehmers 110 eingeführt werden, um so die plastische Verformung des Kraftaufnehmers 110 signaltechnisch verfolgen zu können.

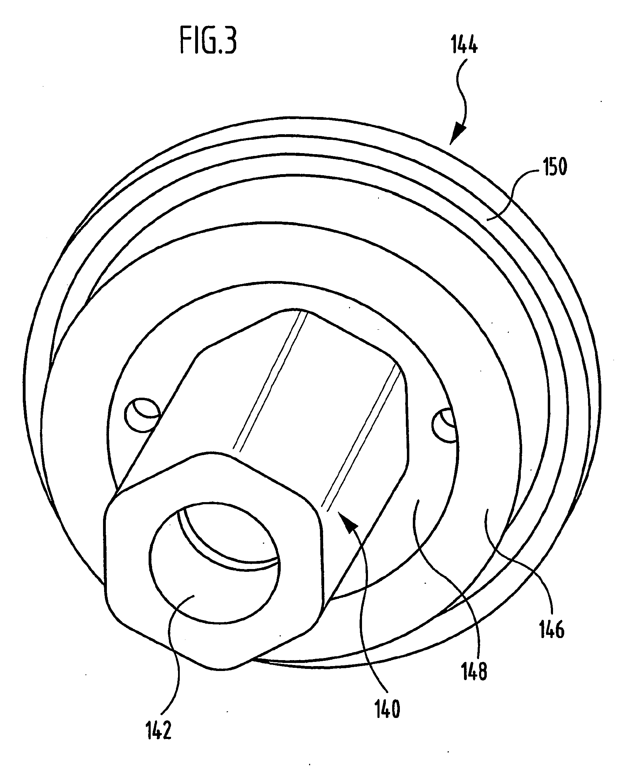

Während bei den Ausführungsformen der Figuren 1A, 1B und 2 der Querschnitt der hohlzylindrischen Kraftaufnehmer 14, 14' und 110 exakt zylindrisch ist, weicht die in Figur 3 gezeigte Kontur des Kraftaufnehmers 140 hiervon ab.

Hier ist eine polygonale Struktur gewählt, welche eine Alternative zu der kreiszylindrischen Struktur der Figuren 1A, 1B und 2 darstellt.

Auch hier ist das freie Ende des Kraftaufnehmers 140 offen (Öffnung 142) gestaltet und wird im vollständig montierten Zustand einer zugehörigen Kraftmesszelle dann von einem Bodenteil eines Krafteinleitungsteiles (beide nicht gezeigt) verschlossen. An dem festgelegten Ende des Kraftaufnehmers 140 ist dieser mit einem Montageteil 144 verbunden, welches eine zylindrische Wandung 146 aufweist, die einen größeren Innendurchmesser aufweist als dies dem Außendurchmesser des Kraftaufnehmers 140 entspricht und diesen in Längsrichtung teilweise überfängt.

Von der zylindrischen Wandung 146 steht im Inneren ein Ringflansch 148 vor, über den das Montageteil 144 mit dem Kraftaufnehmer 140 verbunden ist.

Das Montageteil 144 weist wiederum an seinem dem Kraftaufnehmer 140 entgegengesetzten Ende einen Bund 150 auf, der nach außen absteht und der bei der Montage des Montageteiles in einer Aufnahmeplatte entsprechend der Platte 12 der Figuren 1A und 1B bündig an dieser zur Anlage kommt. Die nach innen durch die Aufnahmeplatte hindurchgreifende zylindrische Wand 146 ist hier nur schematisch gezeigt und lässt die in Figur 1B gezeigten Details vermissen, was für das Verständnis hier aber unbeachtlich ist.

Aufgrund der anders ausgelegten Geometrie der Wandung des hohlzylindrischen Kraftaufnehmers 140 ergeben sich andere Charakteristika in der Auswertung der elastischen Verformung des Kraftaufnehmers 140, die sich im Wege der elektronischen Aufarbeitung der Signale des Hallsensors (hier nicht gezeigt) berücksichtigen lassen.

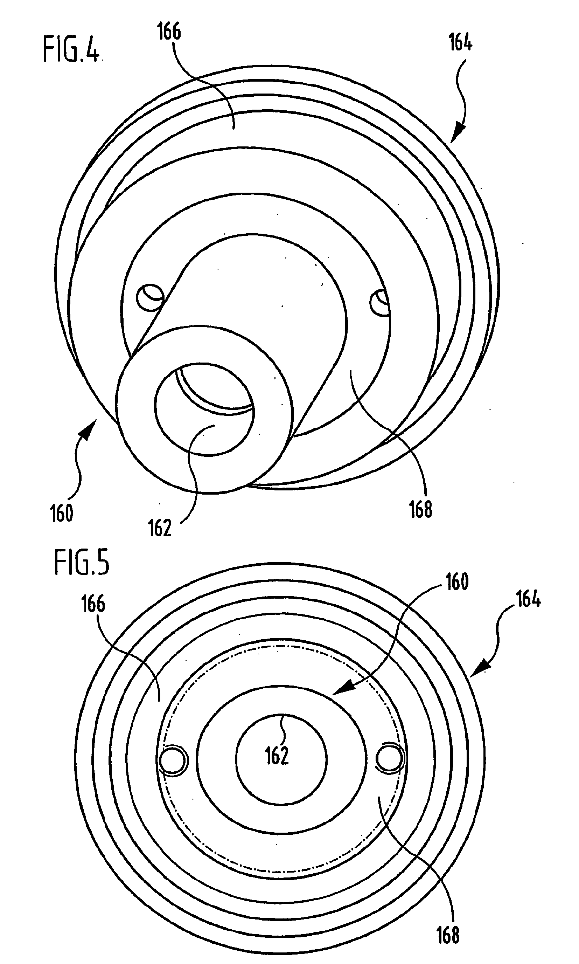

Eine weitere alternative Ausführungsform eines erfindungsgemäß zu verwendenden Kraftaufnehmers in einer erfindungsgemäßen Kraftmesszelle ist in den Figuren 4 und 5 gezeigt.

Hier sieht man einen kraftaufnehmer 160, welcher in der Außenkontur einen ovalen Querschnitt zeigt.

Auch hier weist das freie Ende des Kraftaufnehmers 160 eine Öffnung 162 auf, welches im montierten Zustand der den Kraftaufnehmer 160 beinhaltenden erfindungsgemäßen Kraftmesszelle durch einen Boden eines Krafteinleitungsteiles (nicht dargestellt) verschlossen wird.

An seinem gestellfest montierten Ende ist der Kraftaufnehmer 160 mit einem Montageteil 164 verbunden, welches eine zylindrische Wandung 166 aufweist, welche koaxial zu dem Kraftaufnehmer 160 ausgerichtet ist. Die zylindrische Wand 166 ist mit dem festzulegenden Ende des Kraftaufnehmers 160 über einen nach innen abstehenden Ringflansch 168 verbunden, welcher eine Öffnung freilässt, die mit dem hohlzylindrischen Innenraum des Kraftaufnehmers 160 fluchtet.

Die Art der Montage und die Art der Bestückung mit der Sensoranordnung ist bei dem Ausführungsbeispiel, das in den Figuren 4 und 5 gezeigt ist, nicht von dem der Figuren 2 und 3 verschieden, so dass auf die Ausführungen zu diesen Beispielen verwiesen werden darf.

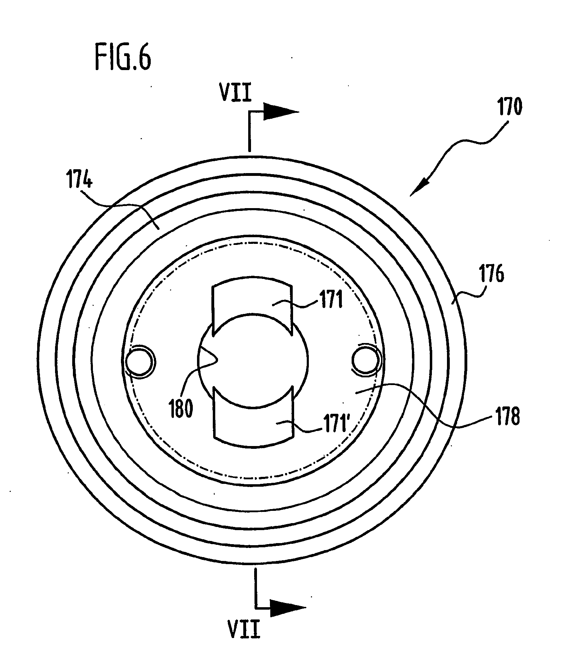

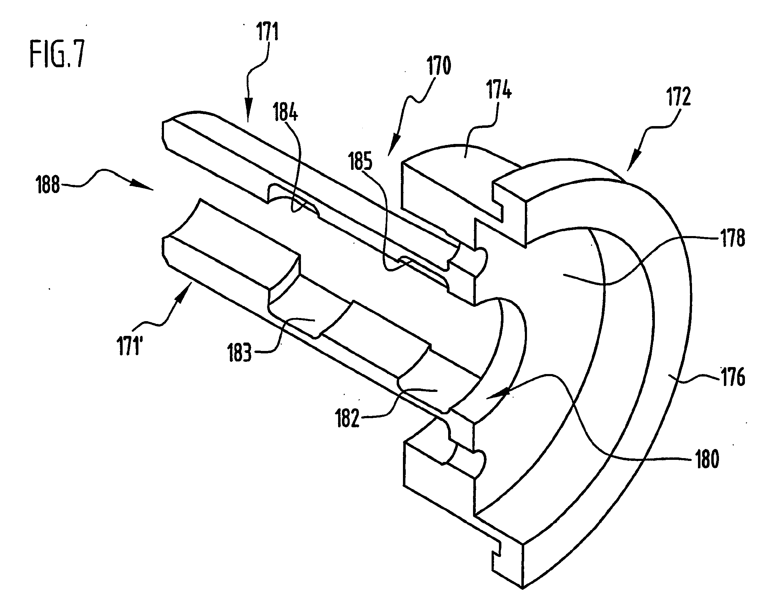

Die Figuren 6 und 7 zeigen eine weitere alternative Ausführungsform der Erfindung in Gestalt eines Kraftaufnehmers 170, der in gewisser Weise ähnlich aufgebaut ist wie die Kraftaufnehmer 14' und 110 der Figur 1B bzw. der Figur 2.

Im Unterschied zu den Kraftaufnehmern 14' und 110 weist der Kraftaufnehmer 170 einen seinem freien Ende benachbarten Abschnitt auf, der anders als bei den Kraftaufnehmern 14' und 110 nicht als geschlossenes Hohlprofil ausgebildet ist, sondern weist an zwei sich radial gegenüberliegenden Segmenten eines Hohlprofiles Durchgangsöffnungen auf. Bevorzugt wird der Hohlstab so gefertigt, dass zunächst ein geschlossenes Hohlprofil verwendet wird, bei dem dann in spanender Bearbeitung die seitlichen Anteile entfernt werden, so dass noch die beiden radial sich gegenüberliegenden Wandsegmente 171, 171' verbleiben.

Der Kraftaufnehmer 170 ist an seinem gestellfest zu haltenden Ende mit einem Montageteil 172 verbunden, welches vorzugsweise mit dem Kraftaufnehmer 170 einstückig ausgebildet ist. Das Montageteil 172 umfasst einen an den Kraftaufnehmer 170 angrenzenden, radial abstehenden Ringflansch 178, von welchem sich in Axialrichtung des Kraftaufnehmers 170 und parallel zu diesem beabstandet eine zylindrische Wand 174 erstreckt. Am Außenumfang des Ringflansches und entgegengesetzt zu der Richtung, in der sich die zylindrische Wand 174 erstreckt, weist der Ringflansch einen Ringbund 176 angeformt auf, der von seiner Funktion her dem Bund 68 der Kraftmesszelle der Figur 1B entspricht.

Der Ringflansch 178 lässt eine Öffnung 180 frei, welche mit dem Inneren des Kraftaufnehmers 170 im Wesentlichen fluchtet.

An den Wandsegmenten 171 und 171' des Kraftaufnehmers 170 sind in Axialrichtung beabstandet Rücksprünge 182, 183 bzw. 184, 185 ausgebildet, die Gelenkstellen des Kraftaufnehmers 170 bilden. Die Wandsegmente 171, 171' werden an ihrem freien Ende auf Abstand gehalten dadurch, dass ähnlich wie in Figur 1B gezeigt dort ein Endstück aufgeschweißt wird, welches einen ins Innere des Kraftaufnehmers 170 weisenden Haltestab trägt, an dem beispielsweise ein Permanentmagnet wie in Figur 1B dargestellt befestigt ist.

Das Endstück, das die beiden Wandsegmente 171 und 171' an ihren freien Enden miteinander verbindet und auf Abstand hält, bildet gleichzeitig einen Teil des Krafteinleitungsteiles für den Kraftaufnehmer 170.

Von Seiten der Öffnung 180 lässt sich über einen biegefesten Bolzen wiederum ein Hall-Element im Inneren des Kraftaufnehmers 170 einführen, um so die elastische Verformung des Kraftaufnehmers 170 signaltechnisch zu verfolgen. Aufgrund einer elastischen Verformung der Wandsegmente 171, 171' wird bei einer Krafteinleitung auf das Krafteinleitungsteil (entspricht dem freien Ende 188 der Wandsegmente 171, 171') eine Relativbewegung des Permanentmagneten gegenüber dem Hall-Sensor bewirkt, was zu einer Signaländerung der Schaltung führt.

Die Ausführungsform der Figuren 6 und 7 hat nun gegenüber den zuvor vorgestellten Ausführungsformen den Vorteil, dass eine verringerte Empfindlichkeit gegenüber auf das Krafteinleitungsteil wirkenden Drehmomenten besteht. Dies bedeutet, dass Drehmomente, die am Krafteinleitungsteil angreifen, sich weniger oder gar nicht störend oder verfälschend auf die vorzunehmende Messung von eingeleiteten Gewichtskräften auswirken. Dadurch erhöht sich die Genauigkeit des Kraftaufnehmers.

Aufgrund der Reduzierung des geschlossenen Hohlprofiles auf die Wandsegmente 171, 171' lässt natürlich gegenüber dem geschlossenen Hohlprofil die mechanische Stabilität des Kraftaufnehmers 170 nach. Dem kann jedoch durch eine Vergrößerung der Dicke der Segmente 171, 171' entgegengewirkt werden, so dass auch mit dieser vorteilhaften Variante des erfindungsgemäßen Kraftaufnehmers derselbe Messbereich abgedeckt werden kann wie z.B. mit dem Kraftaufnehmer der Figur 2. Das bedeutet, dass an der maximal zulässigen zu messenden Gewichtskraft gegenüber den anderen vorgestellten Ausführungsformen mit vollständigem oder geschlossenem Hohlprofil als Hohlstab keine Abstriche gemacht werden müssen.

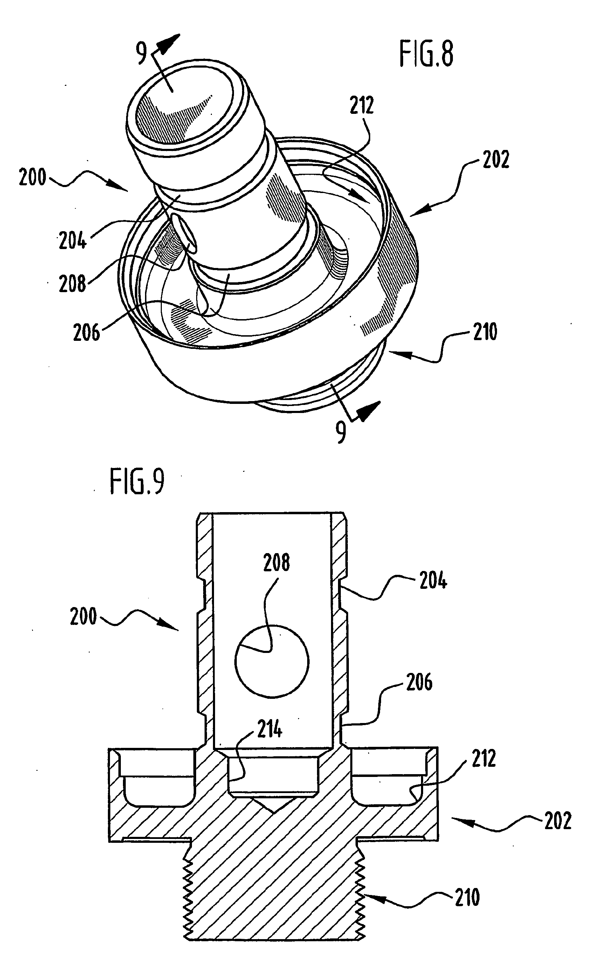

Figur 8 zeigt in perspektivischer Darstellung eine weitere bevorzugte Ausführungsform eines erfindungsgemäßen Kraftaufnehmers 200, der einstückig mit einem Montageteil 202 ausgebildet ist.

Der Kraftaufnehmer 200 ist als Hohlstab ausgebildet, welcher zwei in Längsrichtung voneinander beabstandete Schwächungszonen 204, 206 aufweist.

Während bei den zuvor beschriebenen Ausführungsbeispielen die Schwächungszonen im Inneren des Hohlstabes ausgebildet sind, werden sie im Beispiel des Kraftaufnehmers 200 am Außenumfang eingebracht. An der Funktion des Kraftaufnehmers ändert sich dadurch nichts.

Mittig zwischen den beiden Schwächungszonen 204, 206 ist quer zur Längsrichtung des Hohlstabes eine Querbohrung 208 vorgesehen, die ähnlich wie die Durchgangsöffnungen der Ausführungsform der Figuren 6 und 7 eine erhebliche Verminderung der Empfindlichkeit der Kraftmesszelle gegen auf das Krafteinleitungsteil wirkende Drehmomente bewirkt.

Häufig wird für diesen Zweck die den Hohlstab des Kraftaufnehmers 200 zweifach durchsetzende Querbohrung 208 ausreichen, die gegenüber den Durchgangsöffnungen der in den Figuren 6 und 7 gezeigten Ausführungsform, die Stabilität des Hohlstabes erheblich weniger beeinträchtigt.

Das Montageteil 202 trägt auf einer Seite den Hohlstab des Kraftaufnehmers 200 und auf der gegenüberliegenden Seite einen Montageblock 210, mit dem die gesamte Kraftmesszelle in eine Halterung (nicht gezeigt), beispielsweise am Fahrzeugsitz oder der Sitzschiene eingebaut, beispielsweise verschraubt, werden kann.

Ferner weist das Montageteil 202 eine ringförmige Aufnahme 212 auf, in welcher ein Ende eines Krafteinleitungsteils aufgenommen werden kann.

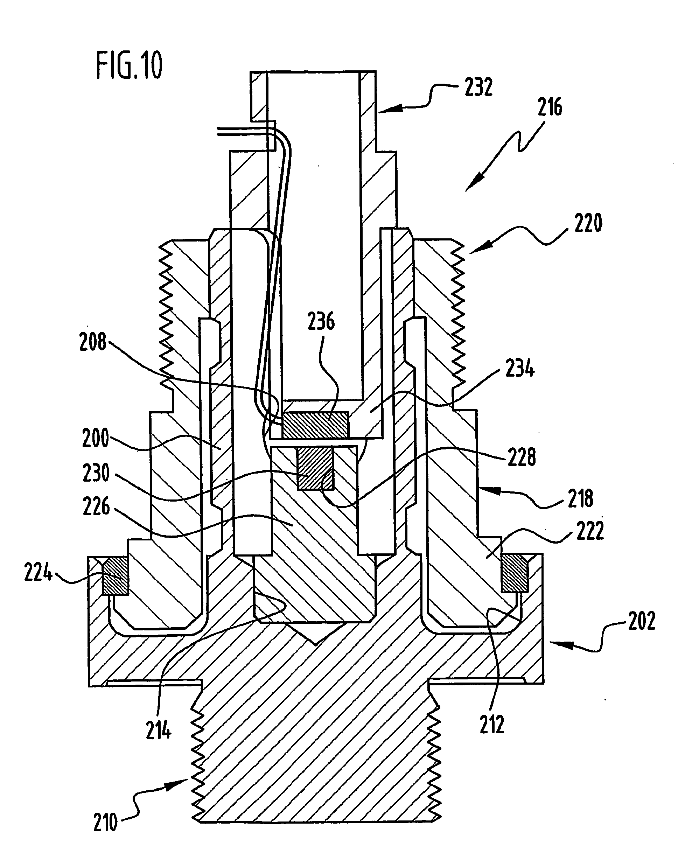

Das Montageteil weist auf Seiten des Hohlstabes 200 ferner eine mittige Bohrung 214 auf (vgl. Figur 9), welche der Aufnahme eines Halteteils dient, an dem ein Teil einer Sensoranordnung befestigbar ist.

Figur 10 zeigt schließlich eine auf dem Kraftaufnehmer 200 aufbauende Kraftmesszelle 216, welche ein hohlzylindrisches Krafteinleitungsteil 218 aufweist, welches koaxial mit dem Hohlstab 200 des Kraftaufnehmers angeordnet ist. Mit einem ersten Ende 220 fasst das Krafteinleitungsteil 218 das freie (zweite) Ende des Kraftaufnehmers 200 und mit einem zweiten Ende 222 greift das Krafteinleitungsteil 218 in die ringförmige Aufnahme 212 des Montageteils 202 ein.

Das zweite Ende 222 des Krafteinleitungsteils 218 ist mit etwas Spiel in der ringförmigen Aufnahme 212 des Montageteils 202 aufgenommen, wobei die aus der Figur 10 ersichtlichen Abstände selbstverständlich nicht maßstäblich und und nur zur Verdeutlichung relativ groß gezeichnet sind.

Das Spiel dient einer im Wesentlichen ungehinderten Bewegung des Krafteinleitungsteils 218, solange zulässige Kräfte auf dieses einwirken. Sobald diese einwirkenden Kräfte unzulässig groß werden, verhindert ein Anschlagring 224 eine weitere Bewegung des Krafteinleitungsteils 218 und verhindert so eine Beschädigung des Hohlstabes 200 des Kraftaufnehmers.

Der Anschlagring 224 kann am Montageteil 202 sehr einfach über komplementäre Vor- und Rücksprünge (im Einzelnen nicht gezeigt) verhakt werden.

Im Inneren des Hohlstabes 200 ist in die mittige Bohrung 214 des Montageteils 202 ein Halteteil in Form eines Stiftes 226 eingesetzt, der an seinem freien Ende einen in einen Rücksprung 228 eingepassten Magneten 230 umfasst.

Am freien Ende des Hohlstabes 200 ist schließlich ein hohlzylindrisches Halteelement 232 befestigt, welches an seinem ins Innere des Hohlstabes 200 ragenden Ende 234 einen Hallsensor 236, ausgerichtet auf den Magneten 230, hält.

## Patentansprüche

1. Kraftmesszelle mit einem elastisch verformbaren Kraftaufnehmer (200) zur Aufnahme einer Gewichtskraft und einer Sensoranordnung zur Erfassung der Kraftaufnehmerverformung und deren Umwandlung in ein elektrisches Wägesignal, wobei der Kraftaufnehmer (200) an einem ersten Ende mit einem Montageteil (202) verbunden ist und an seinem zweiten Ende ein Krafteinleitungsteil (218) trägt und das Krafteinleitungsteil (218) hohlzylindrisch ausgebildet ist und mit einem Ende mit dem zweiten Ende des Kraftaufnehmers (200) verbunden ist und so angeordnet ist, dass es im Wesentlichen den Kraftaufnehmer (200) über dessen gesamte Länge umschließt, **dadurch gekennzeichnet, dass** der Kraftaufnehmer (200) als Hohlstab mit zwei in Längsrichtung des Stabs beabstandeten Schwächungszonen (204, 206) ausgebildet ist, und dass das Krafteinleitungsteil (218) mit seinem anderen Ende am Montageteil (210) beweglich gelagert ist.

2. Kraftmesszelle nach Anspruch 1, **dadurch gekennzeichnet, dass** die Schwächungszonen (204, 206) so ausgebildet sind, dass der Kraftaufnehmer (200) beim Einwirken von zu bestimmenden Gewichtskräften in mehr als einer Ebene elastische Verformungsbewegungen durchführen kann.

3. Kraftmesszelle nach Anspruch 1 oder 2, **dadurch gekennzeichnet, dass** die Schwächungszonen (204, 206) einen Abschnitt des Hohlstabs (200) mit verminderter Wanddicke umfassen.

4. Kraftmesszelle nach einem der Ansprüche 1 bis 3, **dadurch gekennzeichnet, dass** die Schwächungszonen (122, 126; 124, 128) in Umfangsrichtung des Hohlstabs nur partiell in sich radial gegenüberliegenden Kreissegmenten ausgebildet sind.

5. Kraftmesszelle nach einem der Ansprüche 1 bis 4, **dadurch gekennzeichnet, dass** der Hohlstab (140) einen polygonalen Querschnitt aufweist.

6. Kraftmesszelle nach einem der Ansprüche 1 bis 4, **dadurch gekennzeichnet, dass** der Hohlstab (160) einen kreisrunden oder ovalen Querschnitt aufweist.

7. Kraftmesszelle nach einem der Ansprüche 1 bis 6, **dadurch gekennzeichnet, dass** der Hohlstab im Bereich mittig zwischen den Schwächungszonen eine Durchgangsöffnung in Form einer Querbohrung (208) aufweist.

8. Kraftmesszelle nach einem der Ansprüche 1 bis 6, **dadurch gekennzeichnet, dass** der Hohlstab an zwei radial sich gegenüberliegenden Segmenten Durchgangsöffnungen aufweist, welche sich zumindest von der einen bis zur anderen Schwächungszone (182, 1,83; 184, 185) erstrecken.

9. Kraftmesszelle nach Anspruch 8, **dadurch gekennzeichnet, dass** die Durchgangsöffnungen sich im Wesentlichen bis zum zweiten, das Krafteinleitungsteil tragenden Ende des Hohlstabes erstrecken.

10. Kraftmesszelle nach einem der Ansprüche 1 bis 9, **dadurch gekennzeichnet, dass** das Krafteinleitungsteil (218) topfförmig ausgebildet ist und mit seinem offenen Ende den Kraftaufnehmer (200) umfängt.

11. Kraftmesszelle nach Anspruch 10, **dadurch gekennzeichnet, dass** das Krafteinleitungsteil (218) sich im Wesentlichen über die gesamte Länge des Kraftaufnehmers (200) erstreckt, so dass das offene Ende des Krafteinleitungsteils (218) benachbart zu dem Montageteil (210) angeordnet ist.

12. Kraftmesszelle nach Anspruch 1.0 oder 11, **dadurch gekennzeichnet, dass** das Krafteinleitungsteil (218) im Wesentlichen durchbruchsfrei ausgebildet ist.

13. Kraftmesszelle nach einem der Ansprüche 10 bis 12, **dadurch gekennzeichnet, dass** das Krafteinleitungsteil (218) und der Montageteil (210) Befestigungsabschnitte aufweisen, welche eine Krafteinleitung und eine Kraftableitung in benachbarten, vorzugsweise im Wesentlichen parallelen Ebenen definieren.

14. Kraftmesszelle nach einem der vorangehenden Ansprüche, **dadurch gekennzeichnet, dass** das Krafteinleitungsteil (218) an seinem mit dem Kraftaufnehmer verbundenen Ende einen Außengewindeabschnitt umfasst.

15. Kraftaufnehmer nach einem der vorangehenden Ansprüche, **dadurch gekennzeichnet, dass** das Montageteil (210) eine ringförmige Aufnahme für das andere Ende des Krafteinleitungsteils (218) aufweist.

16. Kraftaufnehmer nach einem der vorangehenden Ansprüche, **dadurch gekennzeichnet, dass** das Krafteinleitungsteil (218) am Montageteil (210) mit einem Anschlag gehalten ist, welcher die Bewegung des Krafteinleitungsteils (218) limitiert.

17. Kraftmesszelle nach einem der vorangehenden Ansprüche, **dadurch gekennzeichnet, dass** an dem Montageteil (210) ein Halteelement (226) koaxial zum Hohlstab (200) angeordnet ist, welches sich in dieses hineinerstreckt und der Halterung der Sensoranordnung oder eines Teils (230) hiervon dient.

18. Kraftmesszelle nach Anspruch 17, **dadurch gekennzeichnet, dass** das Halteelement (226) eine Ausnehmung umfasst in der elektrische Signalkabel der Sensoranordnung geführt sind.

19. Kraftmesszelle nach einem der vorangehenden Ansprüche, **dadurch gekennzeichnet, dass** die Kraftmesszelle einen integrierten, mechanischen Überlastschutz umfasst.

20. Kraftmesszelle nach Anspruch 19, **dadurch gekennzeichnet, dass** der mechanische Überlastschutz einen Anschlag umfasst, der die elastische Verformungsbewegung des Kraftaufnehmers (200) begrenzt.

21. Kraftmesszelle nach Anspruch 20, **dadurch gekennzeichnet, dass** der Anschlag an einem Halteelement ausgebildet ist und eine Verformungsbewegung des Kraftaufnehmers (200) selbst limitiert.

22. Kraftmesszelle nach Anspruch 20, **dadurch gekennzeichnet, dass** der Anschlag am Montageteil (210) und am Krafteinleitungsteil (218) ausgebildet ist und die Verformungsbewegung des Kraftaufnehmers (200) indirekt limitiert.

23. Kraftmesszelle nach Anspruch 22, **dadurch gekennzeichnet, dass** der Anschlag am Krafteinleitungsteil (218) und am Kraftaufnehmer (200) ausgebildet ist.

24. Kraftmesszelle nach einem der Ansprüche 13 bis 23, **dadurch gekennzeichnet, dass** das Halteelement (226) eine Ausnehmung (228) zur Aufnahme eines Sensorelements (230) umfasst.

25. Kraftmesszelle nach Anspruch 24, **dadurch gekennzeichnet, dass** die Ausnehmung (228) ein Führungselement zur Festlegung der geometrischen Ausrichtung des Sensorelements (230) aufweist.

26. Kraftmesszelle nach einem der vorangehenden Ansprüche, **dadurch gekennzeichnet, dass** die Sensoranordnung einen oder mehrere Dehnungsmessstreifen umfasst.

27. Kraftmesszelle nach einem der vorangehenden Ansprüche, **dadurch gekennzeichnet, dass** die Sensoranordnung eine Sensoranordnung für eine berührungsfreie Wegmessung umfasst.

28. Kraftmesszelle nach einem der vorangehenden Ansprüche, **dadurch gekennzeichnet, dass** die Sensoranordnung eine induktiv arbeitende Sensoranordnung ist.

29. Kraftmesszelle nach Anspruch 28, **dadurch gekennzeichnet, dass** die Sensoranordnung einen Hallsensor (236) und einen Magneten (230) umfasst.

30. Kraftmesszelle nach Anspruch 29, **dadurch gekennzeichnet, dass** der Magnet ein Permanentmagnet (230) ist.

31. Kraftmesszelle nach Anspruch 29 oder 30, **dadurch gekennzeichnet, dass** der Magnet am Krafteinleitungsteil und der Hallsensor am Halteteil angeordnet ist.

32. Kraftmesszelle nach Anspruch 29 oder 30, **dadurch gekennzeichnet, dass** der Magnet (230) am Halteteil (226) und der Hallsensor (236) am Krafteinleitungsteil (218) angeordnet ist.

33. Kraftmesszelle nach einem der Ansprüche 29 bis 32, **dadurch gekennzeichnet, dass** der Hallsensor (236) und der Magnet (230) der Sensoranordnung so ausgebildet und angeordnet sind, dass der Hallsensor (236) im unbelasteten Zustand der Kraftmesszelle ein elektrisches Signal mit einem Wert kleiner als ein Drittel des Werts des maximalen Nutzsignals erzeugt.

34. Kraftmesszelle nach Anspruch 33, **dadurch gekennzeichnet, dass** der Magnet (230) dem Hallsensor (236) gegenüber als Monopol wirkend ausgebildet ist und dass der Hallsensor (236) eine geradzahlige Anzahl an Sensorelementen umfasst, die in Form einer zweidimensionalen Matrix dem Monopol gegenüberliegend angeordnet sind, wobei jeweils zwei der Sensorelemente einen Teil einer elektronischen Differenzschaltung bilden.

35. Kraftmesszelle nach Anspruch 33, **dadurch gekennzeichnet, dass** der Magnet (230) dem Hallsensor (236) gegenüber als Dipol wirkend ausgebildet ist und dass der Hallsensor (236) ein oder mehrere Sensorelemente, deren Signale getrennt erfassbar sind, umfasst.

36. Kraftmesszelle nach einem der Ansprüche 1 bis 25, **dadurch gekennzeichnet, dass** die Sensoranordnung ein optisches Sensorelement umfasst.

37. Kraftmesszelle nach Anspruch 36, **dadurch gekennzeichnet, dass** der Sensor eine Lichtquelle und eine Schlitzblende einerseits und eine Differenzphotodiode andererseits umfasst, wobei die Lichtquelle und die Schlitzblende gemeinsam am Kraftaufnehmer gehalten sind und die Differenzphotodiode am ortsfesten Montageteil der Kraftmesszelle angeordnet ist.

38. Kraftmesszelle nach Anspruch 36, **dadurch gekennzeichnet, dass** der Sensor eine Lichtquelle und eine Schlitzblende einerseits und eine Differenzphotodiode andererseits umfasst, wobei die Lichtquelle und die Schlitzblende gemeinsam am ortsfesten Montageteil der Kraftmesszelle angeordnet sind und die Differenzphotodiode am Kraftaufnehmer gehalten ist.

## Claims

1. Dynamometric cell with an elastically deformable force transducer (200) for receiving a weight force and a sensor arrangement for detecting the deformation of the force transducer and its conversion into an electric weighing signal, wherein the force transducer (200) is connected to a mounting member (202) at a first end and supports a force introduction member (218) at its second end and the force introduction member (218) is of a hollow cylindrical design and is connected at one end to the second end of the force transducer (200) and is arranged such that it essentially encloses the force transducer (200) over its entire length, **characterized in that** the force transducer (200) is designed as a hollow bar with two attenuation zones (204, 206) spaced in longitudinal direction of the bar, and that the force introduction member (218) is mounted on the mounting member (210) with its other end so as to be movable.

2. Dynamometric cell as defined in claim 1, **characterized in that** the attenuation zones (204, 206) are designed such that the force transducer (200) is able to carry out elastic deformation movements in more than one plane when acted upon by weight forces to be determined.

3. Dynamometric cell as defined in claim 1 or 2, **characterized in that** the attenuation zones (204, 206) comprise a section of the hollow bar (200) having a reduced wall thickness.

4. Dynamometric cell as defined in any one of claims 1 to 3, **characterized in that** the attenuation zones (122, 126; 124, 128) are formed only partially in circumferential direction of the hollow bar in circular segments located radially opposite one another.

5. Dynamometric cell as defined in any one of claims 1 to 4, **characterized in that** the hollow bar (140) has a polygonal cross section.

6. Dynamometric cell as defined in any one of claims 1 to 4, **characterized in that** the hollow bar (160) has a circular or oval cross section.

7. Dynamometric cell as defined in any one of claims 1 to 6, **characterized in that** the hollow bar has a passage in the form of a transverse bore (208) in the area centrally between the attenuation zones.

8. Dynamometric cell as defined in any one of claims 1 to 6, **characterized in that** the hollow bar has passages in two segments located radially opposite one another, said passages extending at least from the one attenuation zone (182, 183; 184, 185) as far as the other one.

9. Dynamometric cell as defined in claim 8, **characterized in that** the passages extend essentially as far as the second end of the hollow bar supporting the force introduction member.

10. Dynamometric cell as defined in any one of claims 1 to 9, **characterized in that** the force introduction member (218) is of a pot-shaped design and surrounds the force transducer (200) with its open end.

11. Dynamometric cell as defined in claim 10, **characterized in that** the force introduction member (218) extends essentially over the entire length of the force transducer (200) so that the open end of the force introduction member (218) is arranged so as to be adjacent to the mounting member (210).

12. Dynamometric cell as defined in claim 10 or 11, **characterized in that** the force introduction member (218) is designed so as to be essentially free from any apertures.

13. Dynamometric cell as defined in any one of claims 10 to 12, **characterized in that** the force introduction member (218) and the mounting member (210) have fixing sections defining a force introduction and a force deflection in adjacent, preferably essentially parallel planes.

14. Dynamometric cell as defined in any one of the preceding claims, **characterized in that** the force introduction member (218) comprises an external thread section at its end connected to the force transducer.

15. Dynamometric cell as defined in any one of the preceding claims, **characterized in that** the mounting member (210) has an annular receiving means for the other end of the force introduction member (218).

16. Dynamometric cell as defined in any one of the preceding claims, **characterized in that** the force introduction member (218) is held on the mounting member (210) with a stop limiting the movement of the force introduction member (218).

17. Dynamometric cell as defined in any one of the preceding claims, **characterized in that** a retaining element (226) is arranged on the mounting member (210) coaxially to the hollow bar (200), said retaining element extending into said bar and serving to hold the sensor arrangement or a part (230) thereof.

18. Dynamometric cell as defined in claim 17, **characterized in that** the retaining element (226) comprises a recess for guiding electric signal cables of the sensor arrangement.

19. Dynamometric cell as defined in any one of the preceding claims, **characterized in that** the dynamometric cell comprises an integrated, mechanical overload protection.

20. Dynamometric cell as defined in claim 19, **characterized in that** the mechanical overload protection comprises a stop limiting the elastic deformation movement of the force transducer (200).

21. Dynamometric cell as defined in claim 20, **characterized in that** the stop is formed on a retaining element and limits any deformation movement of the force transducer (200) itself.

22. Dynamometric cell as defined in claim 20, **characterized in that** the stop is formed on the mounting member (210) and on the force introduction member (218) and limits the deformation movement of the force transducer (200) indirectly.

23. Dynamometric cell as defined in claim 22, **characterized in that** the stop is formed on the force introduction member (218) and on the force transducer (200).

24. Dynamometric cell as defined in any one of claims 13 to 23, **characterized in that** the retaining element (226) comprises a recess (228) for accommodating a sensor element (230).

25. Dynamometric cell as defined in claim 24, wherein the recess (228) has a guide element for determining the geometric alignment of the sensor element (230).

26. Dynamometric cell as defined in any one of the preceding claims, **characterized in that** the sensor arrangement comprises one or more wire strain gauges.

27. Dynamometric cell as defined in any one of the preceding claims, **characterized in that** the sensor arrangement comprises a sensor arrangement for a contact-free distance measurement.

28. Dynamometric cell as defined in any one of the preceding claims, **characterized in that** the sensor arrangement is a sensor arrangement operating inductively.

29. Dynamometric cell as defined in claim 28, **characterized in that** the sensor arrangement comprises a Hall sensor (236) and a magnet (230).

30. Dynamometric cell as defined in claim 29, **characterized in that** the magnet is a permanent magnet (230).

31. Dynamometric cell as defined in claim 29 or 30, **characterized in that** the magnet is arranged on the force introduction member and the Hall sensor on the retaining element.

32. Dynamometric cell as defined in claim 29 or 30, **characterized in that** the magnet (230) is arranged on the retaining element (226) and the Hall sensor (236) on the force introduction member (218).

33. Dynamometric cell as defined in any one of claims 29 to 32, **characterized in that** the Hall sensor (236) and the magnet (230) of the sensor arrangement are designed and arranged such that in the no-load state of the dynamometric cell the Hall sensor (236) generates an electric signal with a value smaller than a third of the value of the maximum effective signal.

34. Dynamometric cell as defined in claim 33, **characterized in that** the magnet (230) is designed to act as a monopole in relation to the Hall sensor (236) and that the Hall sensor (236) comprises an even number of sensor elements arranged in the form of a two-dimensional matrix located opposite the monopole, wherein two of the sensor elements form a respective part of an electronic differential circuit.

35. Dynamometric cell as defined in claim 33, **characterized in that** the magnet (230) is designed to act as a dipole in relation to the Hall sensor (236) and that the Hall sensor (236) comprises one or more sensor elements, the signals of said sensor elements being detectable separately.

36. Dynamometric cell as defined in any one of claims 1 to 25, **characterized in that** the sensor arrangement comprises an optical sensor element.

37. Dynamometric cell as defined in claim 36, **characterized in that** the sensor comprises a light source and a slot diaphragm, on the one hand, and a differential photodiode, on the other hand, wherein the light source and the slot diaphragm are held together on the force transducer and the differential photodiode is arranged on the stationary mounting member of the dynamometric cell.

38. Dynamometric cell as defined in claim 36, **characterized in that** the sensor comprises a light source and a slot diaphragm, on the one hand, and a differential photodiode, on the other hand, wherein the light source and the slot diaphragm are arranged together on the stationary mounting member of the dynamometric cell and the differential photodiode is held on the force transducer.

## Revendications

1. Cellule dynamométrique comportant un capteur de force déformable élastiquement (200) pour enregistrer un poids et un dispositif de capteur pour détecter la déformation du capteur de force et sa conversion en un signal électrique de pesée, dans lequel le capteur de force (200) est relié à une première extrémité à une partie de montage (202) et porte à sa seconde extrémité une partie d'application de force (218) et la partie d'application de force (218) est réalisée sous la forme d'un cylindre creux et est reliée à une extrémité avec la seconde extrémité du capteur de force (200) et est disposée de sorte qu'elle entoure sensiblement le capteur de force (200) sur toute sa longueur, **caractérisée en ce que** le capteur de force (200) est réalisé sous la forme d'une tige creuse avec deux zones d'amincissement (204, 206) écartées dans le sens longitudinal de la tige, et **en ce que** la partie d'application de force (218) est placée mobile à son autre extrémité sur la partie de montage (210).

2. Cellule dynamométrique selon la revendication 1, **caractérisée en ce que** les zones d'amincissement (204, 206) sont réalisées de sorte que le capteur de force (200) peut effectuer des mouvements de déformation élastiques dans plus d'un plan lors de l'action de poids à déterminer.

3. Cellule dynamométrique selon la revendication 1 ou 2, **caractérisée en ce que** les zones d'amincissement (204, de 106) entourent un tronçon de la tige creuse (200) avec une épaisseur de paroi réduite.

4. Cellule dynamométrique selon l'une des revendications 1 à 3, **caractérisée en ce que** les zones d'amincissement (122, 126 ; 124, 128) sont réalisées uniquement partiellement dans des segments de cercle en vis-à-vis radialement dans le sens périphérique de la tige creuse.

5. Cellule dynamométrique selon l'une des revendications 1 à 4, **caractérisée en ce que** la tige creuse (140) présente une section polygonale.

6. Cellule dynamométrique selon l'une des revendications 1 à 4, **caractérisée en ce que** la tige creuse (160) présente une section circulaire ou ovale.

7. Cellule dynamométrique selon l'une des revendications 1 à 6, **caractérisée en ce que** la tige creuse présente dans la zone médiane entre les zones d'amincissement une ouverture de passage sous la forme d'un orifice transversal (208).

8. Cellule dynamométrique selon l'une des revendications 1 à 6, **caractérisée en ce que** la tige creuse présente dans deux segments radialement en vis-à-vis des ouvertures de passage, qui s'étendent en moins d'une zone d'amincissement à l'autre (182, 183 ; 184, 185).

9. Cellule dynamométrique selon la revendication 8, **caractérisée en ce que** les ouvertures de passage s'étendent sensiblement jusqu'à la seconde extrémité de la tige creuse portant la partie d'application de force.

10. Cellule dynamométrique selon l'une des revendications 1 à 9, **caractérisée en ce que** la partie d'application de force (218) est réalisée en forme de récipient et entoure le capteur de force (200) avec son extrémité ouverte.

11. Cellule dynamométrique selon la revendication 10, **caractérisée en ce que** la partie d'application de force (218) s'étend sensiblement sur toute la longueur du capteur de force (200), de sorte que l'extrémité ouverte de la partie d'application de force (218) est disposée adjacente à la partie de montage (210).

12. Cellule dynamométrique selon la revendication 10 ou 11, **caractérisée en ce que** la partie d'application de force (218) est réalisée sensiblement sans ouverture.

13. Cellule dynamométrique selon l'une des revendications 10 à 12, **caractérisée en ce que** la partie d'application de force (218) et la partie de montage (210) présentent des tronçons de fixation, qui définissent une application de force et une déperdition des forces dans des plans adjacents de préférence sensiblement parallèles.

14. Cellule dynamométrique selon l'une des revendications précédentes, **caractérisée en ce que** la partie d'application de force (218) entoure un tronçon de filetage à son extrémité reliée au capteur de force.

15. Capteur de force selon l'une des revendications précédentes, **caractérisé en ce que** la partie de montage (210) présente un évidement annulaire pour l'autre extrémité de la partie (218).

16. Capteur de force selon l'une des revendications précédentes, **caractérisé en ce que** la partie d'application de force (218) est maintenue sur la partie de montage (210) par une butée, qui limite le mouvement de la partie d'application de force (218).

17. Cellule dynamométrique selon l'une des revendications précédentes, **caractérisée en ce que** sur la partie de montage (210) est disposé coaxialement à la tige creuse (200) un élément d'arrêt (226), qui s'étend dans celle-ci et est utilisé pour la fixation du dispositif de capteur ou d'une partie (230) de celui-ci.

18. Cellule dynamométrique selon la revendication 17, **caractérisée en ce que** l'élément d'arrêt (226) entoure une cavité dans laquelle des câbles porte-signal électriques du dispositif de capteur sont guidés.

19. Cellule dynamométrique selon l'une des revendications précédentes, **caractérisée en ce que** la cellule dynamométrique comprend un dispositif de protection contre les surcharges mécanique intégré.

20. Cellule dynamométrique selon la revendication 19, **caractérisée en ce que** le dispositif de protection contre les surcharges mécanique comprend une butée, qui limite le mouvement de déformation élastique du capteur de force (200) .

21. Cellule dynamométrique selon la revendication 20, **caractérisée en ce que** la butée est réalisée sur un élément d'arrêt et limite un mouvement de déformation du capteur de force (200).

22. Cellule dynamométrique selon la revendication 20, **caractérisée en ce que** la butée est réalisée sur la partie de montage (210) et sur la partie d'application de force (218) et limite indirectement le mouvement de déformation du capteur de force (200).

23. Cellule dynamométrique selon la revendication 22, **caractérisée en ce que** la butée est réalisée sur la partie d'application de force (218) et sur le capteur de force (200) .

24. Cellule dynamométrique selon l'une des revendications 13 à 23, **caractérisée en ce que** l'élément d'arrêt (226) comporte un évidement (228) pour recevoir un élément de capteur (230).

25. Cellule dynamométrique selon la revendication 24-, **caractérisée en ce que** l'évidement (228) présente un élément de guidage pour définir l'orientation géométrique de l'élément de capteur (230).

26. Cellule dynamométrique selon l'une des revendications précédentes, **caractérisée en ce que** le dispositif de capteur comporte une ou plusieurs jauges de contrainte.

27. Cellule dynamométrique selon l'une des revendications précédentes, **caractérisée en ce que** le dispositif de capteur comprend un dispositif de capteur pour une mesure de déplacement sans contact.

28. Cellule dynamométrique selon l'une des revendications précédentes **caractérisées en ce que** le dispositif de capteur est un dispositif de capteur fonctionnant de façon inductive.

29. Cellule dynamométrique selon la revendication 28, **caractérisée en ce que** le dispositif de capteur comprend un capteur de Hall (236) et un aimant (230).

30. Cellule dynamométrique selon la revendication 29, **caractérisée en ce que** l'aimant est un aimant permanent (230).

31. Cellule dynamométrique selon la revendication 29 ou 30, **caractérisée en ce que** l'aimant est disposé sur la partie d'application de force et le capteur de Hall sur la partie d'arrêt.

32. Cellule dynamométrique selon la revendication 29 ou 30, **caractérisée en ce que** l'aimant (230) est disposé sur la partie d'arrêt (226) et le capteur de Hall (236) sur la partie d'application de force (218).

33. Cellule dynamométrique selon l'une des revendications 29 à 32, **caractérisée en ce que** le capteur de Hall (236) et l'aimant (230) du dispositif de capteur sont réalisés et disposés de sorte que le capteur de Hall (236) génère, dans un état non chargé de la cellule dynamométrique, un signal électrique avec une valeur inférieure à un tiers de la valeur du signal utile maximal.

34. Cellule dynamométrique selon la revendication 33, **caractérisée en ce que** l'aimant (230) est réalisé contrairement au capteur de Hall (236) en tant que monopole et **en ce que** le capteur de Hall (236) comprend un nombre pair d'éléments de capteur, qui sont disposés sous la forme d'une matrice bidimensionnelle en vis-à-vis du monopole, où respectivement des éléments de capteur forment une partie d'un circuit différentiel électronique.

35. Cellule dynamométrique selon la revendication 33, **caractérisée en ce que** l'aimant (230) est réalisé contrairement au capteur de Hall (236) en tant que dipôle et **en ce que** le capteur de Hall (236) comporte un ou plusieurs éléments de capteur, dont les signaux peuvent être détectés séparément.

36. Cellule dynamométrique selon l'une des revendications 1 à 25, **caractérisée en ce que** le dispositif de capteur comporte un élément de capteur optique.

37. Cellule dynamométrique selon la revendication 36, **caractérisée en ce que** le capteur comporte une source lumineuse et un diaphragme à fente d'une part et une photodiode différentielle d'autre part, où la source lumineuse et le diaphragme à fente sont fixés conjointement sur le capteur de force et la photodiode différentielle est disposée sur la partie de montage fixe de la cellule dynamométrique.

38. Cellule dynamométrique selon la revendication 36, **caractérisée en ce que** le capteur comporte une source lumineuse et un diaphragme à fente d'une part et une photodiode différentielle d'autre part, où la source lumineuse et le diaphragme à fente sont disposés conjointement sur la partie de montage fixe de la cellule dynamométrique et la photodiode différentielle est fixée sur le capteur de force.
